# FASCICULE DE BREVET EUROPEEN

(11) **EP 0 504 739 B1**
(45) Date de publication et mention de la délivrance du brevet: **11.01.1995**
(21) Numéro de dépôt: 92104264.4
(22) Date de dépôt: 12.03.1992
(51) Int. Cl.: B29B 7/62, F16C 13/00

(54) **Cylindre pour mélangeur de caoutchoucs**
Kautschukmischungszylinder
Rubber mixing cylinder

(30) Priorité: 22.03.1991 FR 9103607
(43) Date de publication de la demande: 23.09.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Schwarz, Martial, F-63800 Cournon-d'Auvergne (DE)
(74) Mandataire: Bauvir, Jacques

(56) Documents cités:
- DE-A- 3 528 588
- DE-U- 9 000 980
- FR-A- 1 474 319
- GB-A- 2 121 919
- US-A- 2 712 924
- US-A- 3 120 867
- US-A- 4 050 510

## Description

L'invention concerne des machines servant à la réalisation de mélanges caoutchoutiques.

La plupart des matières premières de l'industrie du caoutchouc sont des solides qui présentent des caractéristiques physiques très hétéroclites (balles de latex, plaques d'isoprène, pastilles d'additifs, noir de carbone pulvérulent) et leurs masses unitaires, par exemple, varient d'environ une centaine de kilos à quelques microgrammes. Avant de pouvoir conformer ces produits avec précision, il faut les mélanger intimement et les rendre plastiques. Ces opérations se font dans des mélangeurs de deux types : d'abord des mélangeurs internes qui sont fermés et où deux rotors ayant des formes complémentaires malaxent les caoutchoucs et leurs charges (comme le noir de carbone) ; puis des mélangeurs à cylindres constitués de cylindres à axes parallèles mis en rotation entre lesquels on fait passer les mélanges de produits plusieurs fois de suite pour les homogénéiser et modifier leurs propriétés physiques (rhéologie, élasticité, etc.).

En sortie de mélangeur interne, les mélanges doivent être refroidis rapidement. De plus, pendant leur travail d'homogénéisation, leur température doit pouvoir être régulée.

Les cylindres des mélangeurs actuels sont des pièces massives, avec ou sans canal central, qui peuvent peser 7 tonnes : leur longueur, avec les deux tourillons, dépasse 2 mètres, et leur diamètre est de l'ordre de 700 mm.

Ils sont traversés par de nombreux canaux longitudinaux - parallèles à l'axe - forés de bout en bout et raccordés de façon plus ou moins complexe à leurs extrémités (voir par exemple le brevet DE 23 15 669) pour permettre une circulation du liquide de régulation de température à partir de l'un des tourillons.

Par ailleurs, on connait des cylindres de mélangeur de caoutchoucs qui sont constitués d'au moins trois parties (un cylindre creux et deux flasques-tourillons) assemblées par des tiges fixées à chaque extrémité dans un flasque-tourillon et traversant les trois parties. Un tel cylindre est illustré, par exemple, dans le document DE-A-35 28 588. L'espace annulaire autour desdites tiges y est rempli d'une matière durcissable afin d'éviter tout phénomène de vibration et/ou de corrosion des tiges.

La présente invention a pour objet un cylindre de mélangeur de caoutchoucs, permettant d'améliorer considérablement les échanges thermiques avec les mélanges et sa résistance mécanique.

Pour un tel cylindre, la présente invention propose un circuit de régulation de température qui comporte, de façon connue en soi, des canaux longitudinaux répartis régulièrement à proximité de la surface extérieure du cylindre où circule le liquide caloporteur et qui est caractérisé en ce que au moins certains desdits canaux longitudinaux sont garnis de tiges pleines pour transformer leurs sections d'écoulement du liquide en sections annulaires.

Un autre aspect de l'invention concerne un cylindre de mélangeur de caoutchoucs constitué d'au moins trois parties, un cylindre creux et deux flasque-tourillons caractérisé en ce que le cylindre creux et les flasque-tourillons sont assemblés par des tiges fixées à chaque extrémité dans un flasque-tourillon et traversant les flasque-tourillons et le cylindre creux dans au moins certains des canaux longitudinaux servant également à la circulation du liquide caloporteur de régulation thermique.

La fixation des tiges se fait de préférence au moyen de deux écrous vissés à chaque extrémité après avoir chauffé la tige à une température supérieure à la température maximale atteinte au cours du fonctionnement du mélangeur.

Le rôle des tiges montées à chaud dans les canaux longitudinaux est ainsi double : d'une part, elles transforment une section de canal circulaire en section annulaire - ce qui est très favorable aux échanges thermiques puisque cela accroît la vitesse de circulation à même débit et favorise le changement de régime d'écoulement -, et d'autre part, grâce à leur retrait thermique, elles jouent le rôle de tirants entre les deux flasques et sur toute la périphérie du cylindre creux, ce qui entraîne une précontrainte de compression axiale du cylindre creux et augmente considérablement la solidité de ce dernier.

Un autre avantage de l'invention est qu'elle permet de réaliser les deux flasque-tourillons en acier forgé d'excellente tenue mécanique, tout en conservant la fonte coulée en coquille pour le cylindre proprement dit qui travaille surtout en compression radiale.

Enfin, un autre avantage de l'invention est le gain de poids considérable qu'elle apporte : le cylindre creux objet de l'invention a un poids de l'ordre de 12 tonnes alors qu'un cylindre plein de géométrie équivalente aurait un poids supérieur à 17 tonnes ; ce gain de poids amène évidemment une économie sur les matériaux et une diminution de l'inertie thermique.

De manière connue en soi, la circulation du liquide de régulation de température dans les canaux se fait en répartissant les flux, mais le fait d'avoir un cylindre en plusieurs parties dont une partie médiane creuse permet de tracer des raccordements beaucoup plus hydrodynamiques que lorsqu'il faut percer une pièce massive, et de pouvoir le faire beaucoup plus facilement.

De préférence, le circuit de régulation de température du cylindre selon l'invention est double, chaque partie étant placée tête-bêche par rapport à l'axe du cylindre, et il permet un flux alterné dans des canaux longitudinaux adjacents.

Une autre variante avantageuse du circuit de régulation de température du cylindre selon l'invention prévoit que le fluide caloporteur de régulation thermique, après avoir régulé la zone superficielle du cylindre creux en passant dans les canaux longitudinaux annulaires, circule le long de la paroi intérieure dudit cylindre creux et assure ainsi son homogénéisation thermique avant d'être évacué dans l'axe du cylindre.

Selon encore une autre variante, les deux parties du circuit de régulation de température ont un regroupement central commun suivi d'une double sortie dans l'axe du cylindre traversant les deux extrémités dudit cylindre.

Pour entraîner le cylindre selon l'invention, on utilise un moteur hydraulique et afin de pouvoir croiser complétement les deux parties du circuit de régulation de température, il est nécessaire que ce moteur hydraulique ait un arbre creux permettant à une des deux entrée-sorties du circuit de régulation de température de le traverser.

Le domaine d'application de l'invention concerne principalement les mélangeurs pour caoutchoucs mais peut aussi s'appliquer à tout autre produit notamment les mélangeurs pour pâte à papier.

On va maintenant décrire un mode de réalisation du cylindre perfectionné, objet de l'invention, en se référant aux dessins annexés, sur lesquels :
- La figure 1 est une demi-coupe longitudinale passant par l'axe du cylindre ;
- La figure 2 est une coupe transversale suivant le plan A-A, tel que représenté sur la figure 1 ;
- La figure 3 représente deux demi-coupes transversales suivant les plans B-B, C-C, tels que représentés sur la figure 1 ;
- Les figures 4 et 5 sont des vues en coupe longitudinales des détails 1 et 2 de la figure 1, agrandis pour mieux montrer certains détails ;
- La figure 6 est une demi-coupe longitudinale du moteur d'entraînement avec un flasque-tourillon.

Le cylindre selon l'invention est constitué par un cylindre creux 1 et deux flasque-tourillons 2 et 3.

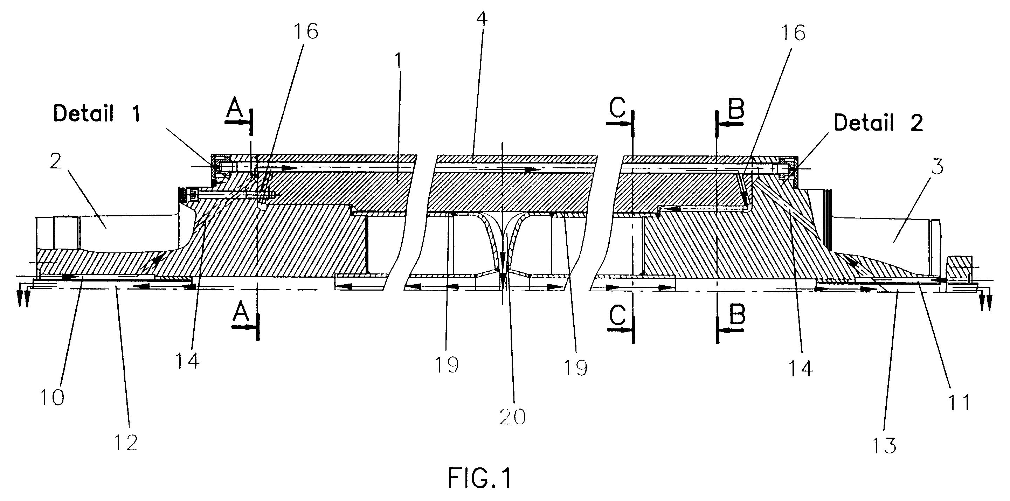

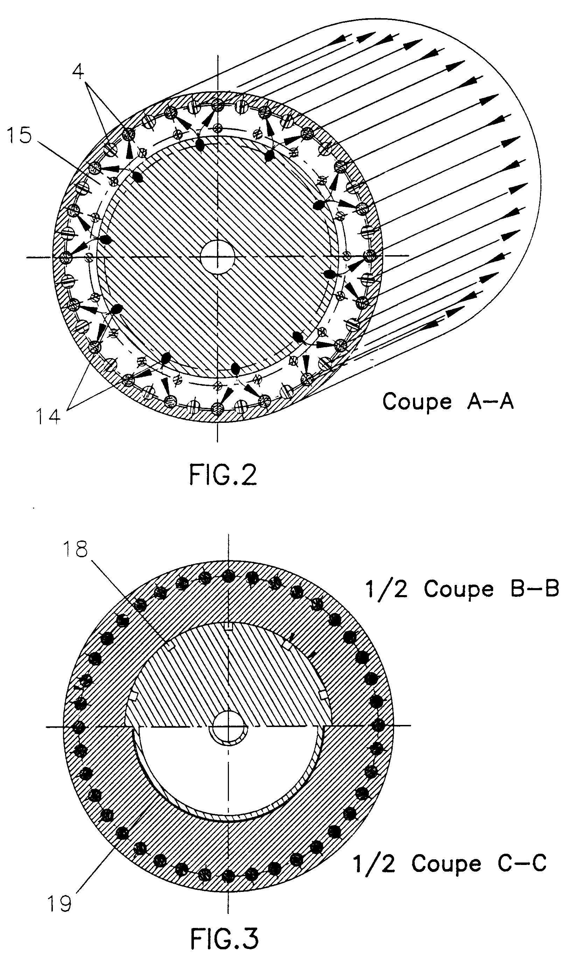

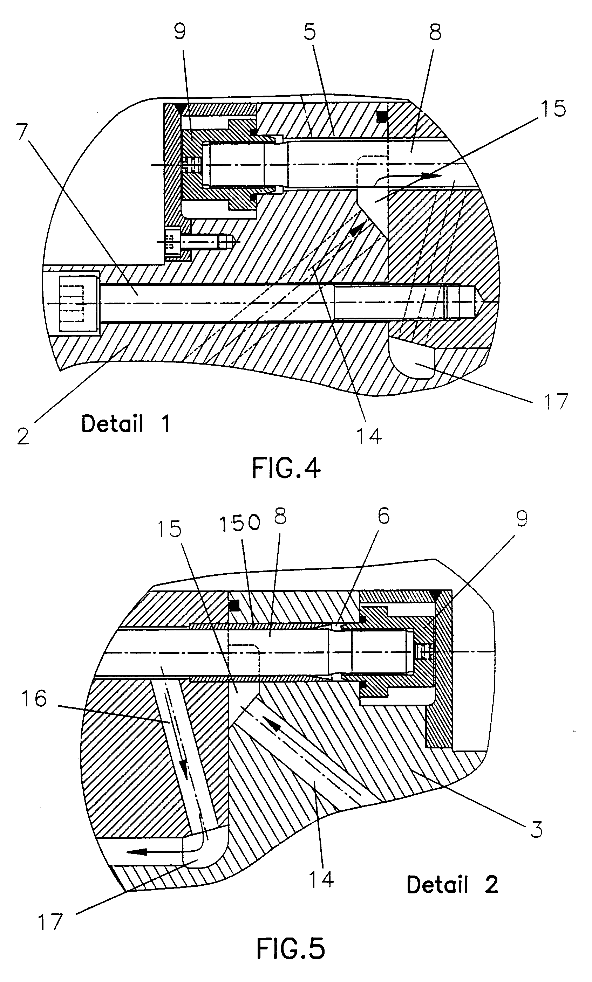

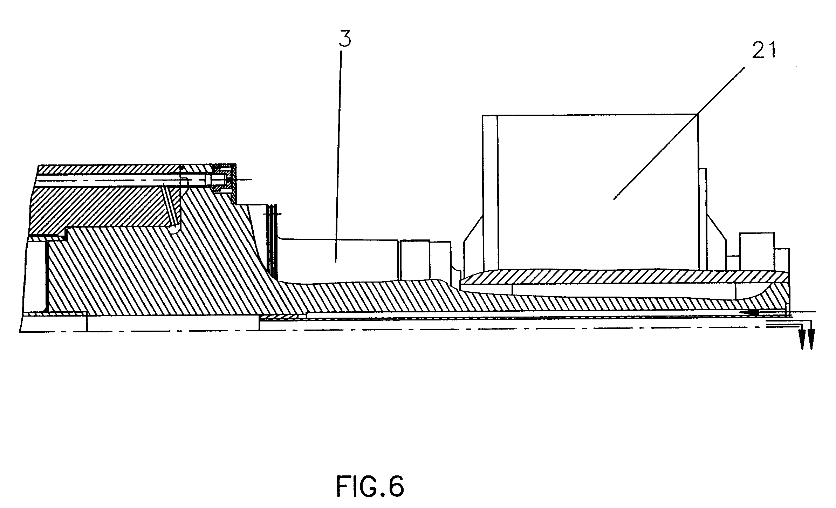

Le cylindre creux est percé de 40 canaux longitudinaux 4 (figures 1 et 2) qui se prolongent dans chaque flasque-tourillon en 5 et 6 (fig. 4 et 5). Les vis 7 servent à maintenir en place les flasques et le cylindre pour l'usinage et l'assemblage du dispositif. Chaque canal est garni d'une tige pleine 8 dont les deux extrémités sont fixées dans un des flasques 2 et 3.

La fixation des tiges se fait au moyen de deux écrous 9 vissés à chaque extrémité après avoir chauffé les tiges à une température supérieure à la température maximale d'utilisation (figures 4 et 5).

Le circuit de régulation de température est double. Il comporte deux entrées 10 et 11 coaxiales avec les deux conduits d'évacuation 12 et 13. Chaque entrée-sortie (10-12, 11-13) est placée dans l'axe du cylindre à l'extrémité d'un flasque-tourillon (2, 3). A l'issue des deux entrées, la répartition du fluide est assurée par 10 trous 14 qui débouchent dans une gorge circulaire 15 (figures 4 et 5) qui, elle-même, alimente 20 des 40 canaux longitudinaux 4 (figure 2). Chacun des deux circuits de répartition - composés des trous 14 et d'une gorge 15 - alimente ainsi 20 canaux longitudinaux 4 répartis de façon alternés dans le cylindre creux 1 de telle sorte que les flux de liquide caloporteur circulent en sens opposés dans des canaux 4 adjacents. A la sortie des canaux, l'évacuation est assurée par 20 trous 16, qui débouchent dans une gorge circulaire 17. Les douilles d'étanchéité 150 obligent le liquide caloporteur, après avoir traversé les canaux annulaires 4, à pénétrer dans les trous d'évacuation 16 sans rejoindre la gorge circulaire 15. La gorge 17 est elle-même reliée au circuit interne qui se compose de 10 cannelures 18 et d'un passage annulaire 19 (figure 3). Ce passage annulaire 19 régule thermiquement la paroi interne du cylindre creux. Enfin, les deux passages annulaires donnent dans un regroupement 20 au centre du cylindre creux suivi des évacuations dans l'axe du cylindre 12 et 13.

La conception de ce double circuit de régulation de température, couplée à la forte diminution d'inertie thermique du cylindre liée à sa partie creuse permet d'améliorer remarquablement les caractéristiques thermiques d'échauffement et de régulation de température.

A titre d'exemple, il suffit de 1,5 mn au lieu de 15 précédemment pour être refroidi de 40 à 24°C, le fluide de refroidissement étant à 20°C, et de 50 s au lieu de 240 pour passer de 30 à 50°C, le fluide étant à 60°C.

D'autre part, le flux croisé du fluide de régulation de température assure une beaucoup plus grande homogénéité thermique du cylindre creux.

Enfin, la conception de ce cylindre en trois parties reliées par des tiges 8 élastiques autorise des cinétiques d'évolution de température supérieures à 20°C par minute alors que précédemment, une conception massive interdisait, sous peine de fatigue thermique, des cinétiques supérieures à 1°C par minute.

La figure 6 présente une demi-coupe d'un flasque-tourillon avec le moteur hydraulique d'entraînement 21 du cylindre. La conception à arbre creux de ce moteur permet au circuit de régulation de température de le traverser.

Dans le cas de ce mode de réalisation de l'invention, le fluide de régulation de température choisi est l'eau. Le circuit de régulation précédemment décrit autorise des débits courants de l'ordre de 30 m³/heure dans chaque circuit, des débits supérieurs sont aussi possibles.

## Revendications

1. Cylindre de mélangeur, en particulier de caoutchoucs, ayant un circuit de régulation de température comportant des canaux longitudinaux (4) répartis régulièrement à proximité de la surface extérieure du cylindre où circule le liquide caloporteur caractérisé en ce que au moins certains desdits canaux longitudinaux (4) sont garnis de tiges (8) pleines pour transformer leurs sections d'écoulement du liquide en sections annulaires.

2. Cylindre selon la revendication 1 constitué d'au moins trois parties, un cylindre creux (1) et deux flasque-tourillons (2, 3), caractérisé en ce que le cylindre creux (1) et les flasque-tourillons (2, 3) sont assemblés par des tiges (8) fixées à chaque extrémité dans un flasque-tourillon (2, 3) et traversant les flasque-tourillons (2, 3) et le cylindre creux (1) dans au moins certains des canaux longitudinaux (4) servant également à la circulation du liquide caloporteur de régulation thermique.

3. Cylindre selon la revendication 2 caractérisé en ce que la fixation des tiges (8) se fait au moyen de deux écrous (9) vissés à chaque extrémité après avoir chauffé la tige (8) à une température supérieure à la température maximale atteinte au cours du fonctionnement du mélangeur.

4. Cylindre selon l'une des revendications 1 à 3 caractérisé en ce que son circuit de régulation de température est double, chaque partie étant placée tête-bêche par rapport à l'axe du cylindre, et en ce qu'il permet un flux alterné dans des canaux longitudinaux (4) adjacents.

5. Cylindre selon la revendication 4 caractérisé en ce que le fluide caloporteur de régulation thermique, après avoir régulé la zone superficielle du cylindre creux (1) en passant dans les canaux longitudinaux (4) annulaires, circule le long de la paroi intérieure dudit cylindre creux (1) et assure ainsi son homogénéisation thermique avant d'être évacué dans l'axe du cylindre.

6. Cylindre selon la revendication 5 caractérisé en ce que chacune des deux parties du circuit de régulation de température comprend une entrée (10, 11) à une extrémité du cylindre, un circuit de répartition rejoignant les canaux longitudinaux (4) du cylindre creux (1), un circuit d'évacuation des canaux, un circuit interne, un regroupement (20) central et une sortie (12, 13) passant par l'axe du cylindre.

7. Cylindre selon la revendication 5 caractérisé en ce que les deux parties du circuit de régulation de température ont un regroupement (20) central commun suivi d'une double sortie (12, 13) dans l'axe du cylindre traversant les deux extrémités dudit cylindre.

8. Cylindre selon l'une des revendications 1 à 7 caractérisé en ce qu'il est entraîné par un moteur hydraulique (21) à arbre creux permettant à une des deux entrée-sorties (11-13) du circuit de régulation de température de le traverser.

9. Application du cylindre selon l'une des revendications 1 à 8 au mélange de pâte à papier.

## Claims

1. A mixing mill cylinder, in particular for rubber, having a temperature-regulating circuit comprising longitudinal channels (4) distributed regularly near to the outside surface of the cylinder in which the heat-exchanging fluid circulates, characterised in that at least some of said longitudinal channels (4) are provided with solid rods (8) to convert their sections for flow of the liquid into annular sections.

2. A cylinder according to Claim 1, consisting of at least three parts, a hollow cylinder (1) and two flange-journals (2, 3), characterised in that the hollow cylinder (1) and the flange-journals (2, 3) are assembled by rods (8) fastened at each end in a flange-journal (2, 3) and passing through the flange-journals (2, 3) and the hollow cylinder (1) in at least some of the longitudinal channels (4) which are also used for the circulation of the heat-exchanging liquid for thermal regulation.

3. A cylinder according to Claim 2, characterised in that the fastening of the rods (8) is performed by two nuts (9) screwed onto each end after having heated the rod (8) to a temperature higher than the maximum temperature reached during the operation of the mixing mill.

4. A cylinder according to one of Claims 1 to 3, characterised in that its temperature-regulating circuit is dual, each part being placed head-to-tail with respect to the axis of the cylinder, and in that it permits opposite flows in adjacent longitudinal channels (4).

5. A cylinder according to Claim 4, characterised in that the heat-exchanging fluid for thermal regulation, after having regulated the surface zone of the hollow cylinder (1) by passing through the annular longitudinal channels (4), circulates along the inside wall of said hollow cylinder (1) and thus provides for the thermal homogenisation thereof before being evacuated via the axis of the cylinder.

6. A cylinder according to Claim 5, characterised in that each of the two parts of the temperature-regulating circuit has an inlet (10, 11) at one end of the cylinder, a distribution circuit joining the longitudinal channels (4) of the hollow cylinder (1), an evacuation circuit for the channels, an internal circuit, a central collector part (20) and an outlet (12, 13) passing through the axis of the cylinder.

7. A cylinder according to Claim 5, characterised in that the two parts of the temperature-regulating circuit have a common central collector part (20) followed by dual outlets (12, 13) that pass through both ends of said cylinder and in the axis of the cylinder.

8. A cylinder according to one of Claims 1 to 7, characterised in that it is driven by a hydraulic motor (21) with a hollow shaft making it possible for one of the two inlet-outlets (11-13) of the temperature-regulating circuit to pass through it.

9. The application of the cylinder according to one of Claims 1 to 8 to the mixing of paper pulp.

## Patentansprüche

1. Zylinder für eine Mischvorrichtung, insbesondere eine Kautschukmischvorrichtung, mit einem Temperaturregelkreislauf, der regelmäßig in der Nähe der Außenfläche des Zylinders verteilte Längskanäle (4) umfaßt, in denen die Wärmeaustauschflüssigkeit umläuft,
**dadurch gekennzeichnet,**
daß wenigstens bestimmte der Längskanäle (4) mit massiven Stangen (8) bestückt sind, um deren Flüssigkeitsströmungsquerschnitte in ringförmige Querschnitte umzuwandeln.

2. Zylinder nach Anspruch 1, der aus wenigstens drei Bereichen, einem Hohlzylinder (1) und zwei Lagerzapfenflanschen (2, 3) gebildet ist,
**dadurch gekennzeichnet,**
daß der Hohlzylinder (1) und die Lagerzapfenflansche (2, 3) mittels Stangen (8) zusammengebaut sind, die an jedem Ende in einem Lagerzapfenflansch (2, 3) befestigt sind und die Lagerzapfenflansche (2, 3) und den Hohlzylinder (1) wenigstens in bestimmten der Längskanäle (4) durchlaufen, die auch zum Umlauf der Wärmeaustauschflüssigkeit für die Temperaturregelung dienen.

3. Zylinder nach Anspruch 2,
dadurch gekennzeichnet,
daß die Befestigung der Stangen (8) mit Hilfe zweier Muttern (9) durchgeführt ist, die an jedes Ende angeschraubt werden, nachdem die Stange (8) auf eine Temperatur erhitzt worden ist, die höher ist als die im Betrieb der Mischvorrichtung maximal erreichte Temperatur.

4. Zylinder nach einem der Ansprüche 1 bis 3,
dadurch gekennzeichnet,
daß sein Temperaturregelkreislauf doppelt ist, wobei die Bereiche bezüglich der Zylinderachse entgegengesetzt angeordnet sind, und einen alternierenden Fluß in benachbarten Längskanälen (4) ermöglicht.

5. Zylinder nach Anspruch 4,
dadurch gekennzeichnet,
daß die Wärmeaustauschflüssigkeit für die Temperaturregelung, nachdem sie den Oberflächenabschnitt des Hohlzylinders (1) beim Durchlaufen der ringförmigen Längskanäle (4) geregelt hat, entlang der Innenwand des Hohlzylinders (1) umläuft und so dessen thermische Homogenisierung sicherstellt, bevor sie auf der Zylinderachse abgeleitet wird.

6. Zylinder nach Anspruch 5,
dadurch gekennzeichnet,
daß jeder der zwei Bereiche des Temperaturregelkreislaufs einen Eingang (10, 11) an einem Ende des Zylinders, einen Verteiler, der die Längskanäle (4) des Hohlzylinders (1) zusammenführt, ein Leitungssystem zur Entleerung der Kanäle, ein internes Leitungssystem, eine zentrale Zusammenführung (20) und einen durch die Achse des Zylinders verlaufenden Ausgang (12, 13) umfaßt.

7. Zylinder nach Anspruch 5,
dadurch gekennzeichnet,
daß die zwei Bereiche des Temperaturregelkreislaufs eine zentrale Zusammenführung (20) haben, gefolgt von einem doppelten Ausgang (12, 13) auf der Achse des Zylinders, die die beiden Enden des Zylinders durchläuft.

8. Zylinder nach einem der Ansprüche 1 bis 7,
dadurch gekennzeichnet,
daß er von einem hydraulischen Motor (21) mit hohler Welle angetrieben wird, um zu ermöglichen, daß einer der zwei Ein-Ausgänge (11-13) des Temperaturregelkreislaufs durch diesen hindurch verläuft.

9. Verwendung des Zylinders nach einem der Ansprüche 1 bis 8 zum Mischen von Papierpaste.
